(19) Europäisches Patentamt
European Patent Office
Office européen des brevets

(11) **EP 3 809 843 B1**

(12) **EUROPEAN PATENT SPECIFICATION**

(45) Date of publication and mention
of the grant of the patent:
**04.09.2024 Bulletin 2024/36**

(51) International Patent Classification (IPC):
*A01N 25/04* (2006.01)   *A01N 25/00* (2006.01)
*A01N 37/46* (2006.01)   *A01N 47/24* (2006.01)
*A01N 51/00* (2006.01)   *A01N 43/50* (2006.01)

(21) Application number: **19734652.1**

(22) Date of filing: **18.06.2019**

(52) Cooperative Patent Classification (CPC):
(C-Sets available)
**A01N 25/00; A01N 25/04**                (Cont.)

(86) International application number:
**PCT/US2019/037636**

(87) International publication number:
**WO 2019/246031 (26.12.2019 Gazette 2019/52)**

(54) **AQUEOUS SEED COATING COMPOSITION**

WÄSSRIGE SAMENBESCHICHTUNGSZUSAMMENSETZUNG

COMPOSITION AQUEUSE DE REVÊTEMENT DE GRAINE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.06.2018 US 201862686769 P**

(43) Date of publication of application:
**28.04.2021 Bulletin 2021/17**

(73) Proprietor: **Kuraray Co., Ltd.
Kurashiki-shi, Okayama 710-0801 (JP)**

(72) Inventors:
• **GHEBREMESKEL, Ghebrehiwet
Houston, Texas 77058 (US)**
• **KATO, Masaki
Houston, Texas 77058 (US)**
• **NEUFELD, Levi
Houston, Texas 77058 (US)**

(74) Representative: **Müller-Boré & Partner
Patentanwälte PartG mbB
Friedenheimer Brücke 21
80639 München (DE)**

(56) References cited:
**JP-A- 2015 077 100     US-A- 3 947 996**

US-A- 5 300 127     US-A- 5 622 003
US-A1- 2013 165 487     US-A1- 2017 265 459

• **D. SELSE: "AkzoNobel: AdseeTM ST4, A
polymeric binder for seed treatment - A
sustainable solution", AGROPAGES, 31 May
2018 (2018-05-31), XP055621790, Retrieved from
the Internet
<URL:http://news.agropages.com/News/NewsD
etail---26240.htm> [retrieved on 20190912]**
• **NN: "Kuraray Exceval technical data sheet", 20
June 2016 (2016-06-20), pages 1 - 3, XP055432355,
Retrieved from the Internet
<URL:https://web.archive.org/web/20160620195
810if_/http://www.kuraray.eu/fileadmin/Downloa
ds/exceval/TDS_Exceval_en.pdf> [retrieved on
20171206]**

EP 3 809 843 B1

(52) Cooperative Patent Classification (CPC): (Cont.)

C-Sets
**A01N 25/00, A01N 37/46, A01N 43/50,
A01N 47/24, A01N 51/00;
A01N 25/04, A01N 37/46, A01N 43/50,
A01N 47/24, A01N 51/00**

## Description

### Field of the Invention

The present invention relates generally to an aqueous seed coating composition based on a specific polyvinyl alcohol copolymer resin as a binder, and seeds coated with such coating composition. The resulting coated seeds have a desirable combination of bulk low dusting, bulk seed flowability and good germination characteristics.

Particularly, the polyvinyl alcohol copolymer is selected from (a) a specific highly-hydrolyzed copolymer of vinyl acetate with a minor amount of ethylene, and (b) a specific highly-hydrolyzed copolymer of vinyl acetate with a minor amount of an unsaturated acid comonomer component.

The seed coating compositions comprise such polyvinyl alcohol copolymer in an aqueous carrier medium along with a hydrophobic "pesticide" additive and other optional additives.

### Background of the Invention

Seed treatment refers to the application of a material to the seed in order to improve handling characteristics, protect the seed prior to germination, as well as to support the germination process. In addition, seed treatments impart pest resistance properties to the seed or resulting plant by incorporating active "pesticide" ingredients such as insecticides, fungicides and nematocides. Plant growth regulators which improve the handling characteristics of the seeds may also be added to the seed coating formulation. Seed treatment eliminates, or at least reduces the need for, traditional broadcast sprays of foliar fungicides or insecticides.

Many known seed treatments unfortunately are known to produce excessive dust during storage and application of seed material, may result in bulk seed clumping, and may reduce germination efficiency.

Various and numerous seed coating compositions and ingredients which improve seed handling, germination, storage and growth properties have been disclosed in the literature. See, for example, US3698133, US3707807, US3947996, US4249343, US4272417, US4729190, US5849320, US5876739, US90101131B2, WO90/11011A1, WO2005/062899A2, WO2008/037489A2, WO2013/166020A1 and WO2017/187994A1.

Aqueous seed coating compositions typically comprise an aqueous medium, one or more functional additives and a binder which forms a matrix for the various functional additives upon drying after application, as well as a protective film for covering the seed.

Some seed treatments incorporate preventative treatments and enhancements, for example, treatments having a pesticide (such as a fungicide and/or insecticide) in combination with one or more plant inducers and/or inoculants.

As disclosed in the above-cited references, many different materials have been used as binders in aqueous seed coating compositions.

Among the disclosed binder materials are generally included polyvinyl alcohol homopolymers, copolymers, and functionally modified and/or crosslinked versions thereof. See, for example, the above-cited references US3707807, US3947996, US4249343, US4272417, US5849320, US5876739, US90101131B2 and WO2017/187994A1.

Some of the commercially available polymeric binders, including some polyvinyl alcohols, suffer from low water solubility/dipsersibility, low coated seed flowability, high levels of dust-off and/or poor plantability characteristics.

For example, a seed coating additive optimized to reduce dust-off may result in poor seed flowability. This can be explained by the fact that ingredients added to increase the stickiness of a coating, so that it is less susceptible to dusting, can cause unacceptably poor flowability and plantability characteristics since the stickiness which normally reduces dust-off creates flowability problems.

On the other hand, the factors which increase seed flowability characteristics of the coating have negative impact on dust-off properties. For planting seeds mechanically, it is essential that the seeds do not agglomerate. Seeds coated with polymeric binders that have inadequate hydrophobicity will stick together, particularly when exposed to warm, humid air such as is encountered in summer in a storage barn.

Further, US 2013/165487 A1 describes aqueous seed treatment formulations that protect plant propagation material against attack by pests.

There is a need for a water-based, biodegradable and cost-effective seed coating which improves the long term storage stability, provides low dust-off properties while maintaining or even improving the seed's germination and seed handling properties. The present invention discloses seed treatment formulations based on certain specified polyvinyl alcohols as binders which, when applied to seeds, provides a coated seed with a good combination of dust-off properties, long-term storage stability, seed flowability, plantability, as well as germination characteristics.

### Summary of the Invention

In accordance with the present invention, it has been found that certain specified polyvinyl alcohol copolymer binders in combination with hydrophobic pesticides in aqueous seed coating compositions provide an overall combination of desirable features such as dust off characteristic, seed flowability, storage stability and germination rate.

The aspects of the present invention are set out in the appended set of claims.

In one embodiment, the coating composition further comprises a starch.

These and other embodiments, features and advantages of the present invention will be more readily understood by those of ordinary skill in the art from a reading of the following detailed description.

## Detailed Description

The present invention relates to an aqueous seed coating composition, a seed coated with such coating composition polyvinyl alcohol product, a plurality of such seeds having a specified bulk dust-off property. Further details are provided below.

Unless otherwise defined, all technical and scientific terms used herein have the same meaning as commonly understood by one of ordinary skill in the art to which this disclosure belongs. In case of conflict, the present specification, including definitions, will control.

Except where expressly noted, trademarks are shown in upper case.

Unless stated otherwise, all percentages, parts, ratios, *etc.,* are by weight.

Unless stated otherwise, pressures expressed in psi units are gauge, and pressures expressed in kPa units are absolute. Pressure differences, however, are expressed as absolute (for example, pressure 1 is 0.17 MPa (25 psi) higher than pressure 2).

When an amount, concentration, or other value or parameter is given as a range, or a list of upper and lower values, this is to be understood as specifically disclosing all ranges formed from any pair of any upper and lower range limits, regardless of whether ranges are separately disclosed. Where a range of numerical values is recited herein, unless otherwise stated, the range is intended to include the endpoints thereof, and all integers and fractions within the range. It is not intended that the scope of the present disclosure be limited to the specific values recited when defining a range.

When the term "about" is used in describing a value or an end-point of a range, the disclosure should be understood to include the specific value or end-point referred to.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but can include other elements not expressly listed or inherent to such process, method, article, or apparatus.

The transitional phrase "consisting of" excludes any element, step, or ingredient not specified in the claim, closing the claim to the inclusion of materials other than those recited except for impurities ordinarily associated therewith. When the phrase "consists of" appears in a clause of the body of a claim, rather than immediately following the preamble, it limits only the element set forth in that clause; other elements are not excluded from the claim as a whole.

The transitional phrase "consisting essentially of" limits the scope of a claim to the specified materials or steps and those that do not materially affect the basic and novel characteristic(s) of the claimed invention. A "consisting essentially of" claim occupies a middle ground between closed claims that are written in a "consisting of" format and fully open claims that are drafted in a "comprising" format. Optional additives as defined herein, at a level that is appropriate for such additives, and minor impurities are not excluded from a composition by the term "consisting essentially of".

Further, unless expressly stated to the contrary, "or" and "and/or" refers to an inclusive and not to an exclusive. For example, a condition A or B, or A and/or B, is satisfied by any one of the following: A is true (or present) and B is false (or not present), A is false (or not present) and B is true (or present), and both A and B are true (or present).

The use of "a" or "an" to describe the various elements and components herein is merely for convenience and to give a general sense of the disclosure. This description should be read to include one or at least one and the singular also includes the plural unless it is obvious that it is meant otherwise.

The term "predominant portion", as used herein, unless otherwise defined herein, means that greater than 50% of the referenced material. If not specified, the percent is on a molar basis when reference is made to a molecule (such as hydrogen, methane, carbon dioxide, carbon monoxide and hydrogen sulfide), and otherwise is on a weight basis (such as for carbon content).

The term "substantial portion" or "substantially", as used herein, unless otherwise defined, means all or almost all or the vast majority, as would be understood by the person of ordinary skill in the context used. It is intended to take into account some reasonable variance from 100% that would ordinarily occur in industrial-scale or commercial-scale situations.

The term "depleted" or "reduced" is synonymous with reduced from originally present. For example, removing a substantial portion of a material from a stream would produce a material-depleted stream that is substantially depleted of that material. Conversely, the term "enriched" or "increased" is synonymous with greater than originally present.

As used herein, the term "copolymer" refers to polymers comprising copolymerized units resulting from copolymerization of two or more comonomers. In this connection, a copolymer may be described herein with reference to its constituent comonomers or to the amounts of its constituent comonomers, for example "a copolymer comprising vinyl acetate and 15 mol% of a comonomer", or a similar description. Such a description may be considered informal in that it does not refer to the comonomers as copolymerized units; in that it does not include a conventional nomenclature for the copolymer, for example International Union of Pure and Applied Chemistry (IUPAC) nomenclature; in that it does not use product-by-process terminology; or for another reason. As used herein, however, a description of a copolymer with reference to its constituent comonomers or to the amounts of its constituent comonomers means that the copolymer contains copolymerized units (in the specified amounts when specified) of the specified comonomers. It follows as a corollary that a copolymer is not the product of a reaction mixture containing given comonomers in given amounts, unless expressly stated in limited circumstances to be such.

The term "unit" refers to a unit operation. When more than one "unit" is described as being present, those units are operated in a parallel fashion unless otherwise stated. A single "unit", however, may comprise more than one of the units in series, or in parallel, depending on the context. For example, a thermal treating unit may comprise a first cooling unit followed in series by a second cooling unit.

The term "free-flowing" particles (or agglomerates or seeds) as used herein means that the particles do not materially further agglomerate (for example, do not materially further aggregate, cake or clump), as is well understood by those of ordinary skill in the relevant art. Free-flowing particles need not be "dry" but, desirably, the moisture content of the particles is substantially internally contained so that there is minimal (or no) surface moisture.

The term "solids content" refers to the material remaining after removal of water from the aqueous coating composition.

For convenience, many elements of the present invention are discussed separately, lists of options may be provided and numerical values may be in ranges; however, for the purposes of the present disclosure, that should not be considered as a limitation on the scope of the disclosure or support of the present disclosure for any claim of any combination of any such separate components, list items or ranges. Unless stated otherwise, each and every combination possible with the present disclosure should be considered as explicitly disclosed for all purposes.

Polyvinyl Alcohol Copolymers

Polyvinyl alcohol homopolymers and copolymers are in a general sense well-known polymers and are generally commercially available in many forms for a variety of end uses.

Polyvinyl alcohol cannot readily be produced directly from vinyl alcohol. Instead, polyvinyl alcohol is produced on a commercial scale by polymerizing vinyl acetate (with optional comonomers) to generate polyvinyl acetate, after which the acetate groups are hydrolyzed to hydroxyl groups in varying degrees. Several different hydrolysis methods are well known and can be used for this purpose.

Polyvinyl alcohols suitable for use in the present invention can be classified into two general categories:

(1) a hydrolyzed copolymer of vinyl acetate and ethylene as comonomers, wherein the copolymer has (a) an ethylene content of from about 0.1 mol% to about 15 mol% based on the total moles of monomers, (b) a viscosity-average degree of polymerization of from about 300 to about 3000, and (c) a degree of hydrolysis of from about 85 mol% to 100 mol%; and

(2) a hydrolyzed copolymer of vinyl acetate and one or more specified unsaturated acids as comonomers, wherein the copolymer has (i) an unsaturated acid monomer content of from about 0.1 mol% to about 15 mol% based on the total moles of monomers, (ii) a viscosity-average degree of polymerization of from about 300 to about 3000, and (iii) a degree of hydrolysis of from about 70 mol% to 100 mol%.

Polyvinyl Alcohol Copolymer (1)

Polyvinyl alcohol copolymer (1) is a hydrolyzed vinyl acetate/ethylene copolymer that is more hydrophobic (as compared to a polyvinyl alcohol homopolymer with a similar degree of hydrolysis and degree of polymerization) but with some warm-water (35°C) solubility characteristics.

The polyvinyl acetate copolymer starting material for polyvinyl alcohol copolymer (1) is typically produced by the free radical polymerization of the vinyl acetate monomer with a minor amount of ethylene as a comonomer in the presence of a polymerization catalyst.

The solvent commonly used in the commercial polymerization of vinyl acetate is methanol. The polymerization is typically conducted in the temperature range of 10°C to 80°C. The lower end of the polymerization range is known to give products with improved properties. The percent conversion of vinyl acetate can vary over a wide range. Though conversions ranging from 20% to 100% have been found satisfactory, commercially at least about 30% conversion is preferable.

The ethylene content of polyvinyl acetate copolymer (and resulting polyvinyl alcohol copolymer (1)) ranges from about 0.1 mol%, or from about 0.5 mol%, or from about 1.0 mol%, or from about 2.5 mol%, to about 15 mol%, or to about 10 mol%, or to about 8 mol%, based on the total moles of monomers.

The viscosity-average degree of polymerization of the polyvinyl acetate copolymer (and resulting polyvinyl alcohol copolymer (1)) varies anywhere from about 300, or from about 500, or from about 700, to about 3000, or to about 2000. The viscosity-average degree of polymerization of a polyvinyl alcohol copolymer is a value measured in accordance with JIS K6726 (1994). Specifically, a polyvinyl alcohol copolymer is re-saponified to a degree of hydrolysis of 99.5 mol% or more and purified, and then the viscosity-average degree of polymerization thereof can be calculated using the following formula (I) from the intrinsic viscosity [η] (l/g) thereof measured in water at 30°C:

$$P = ([\eta] \times 10000/8.29)^{(1/0.62)} \quad \text{(I)}$$

The polyvinyl acetate is converted to polyvinyl alcohol via hydrolysis or alcoholysis processes generally known to those of ordinary skill in the relevant art. In such processes, the polyvinyl acetate is contacted with an alkali catalyst such as sodium hydroxide or sodium methylate. The major products of this reaction are polyvinyl alcohol and methyl acetate.

For polyvinyl alcohol copolymer (1), degree of hydrolysis ranges from about 85%, or from about 90 mol%, or from about 97 mol%, to 100 mol% (maximum). The degree of hydrolysis can be measured in accordance with JIS K6726 (1994).

Polyvinyl Alcohol Copolymer (2)

Polyvinyl alcohol copolymer (2) is a hydrolyzed acid-functional polyvinyl acetate copolymer.

The polyvinyl acetate copolymer starting material is typically produced by the free radical polymerization of the vinyl acetate monomer with one or more "acid-functional" comonomers in the presence of a polymerization catalyst. The solvent commonly used in the commercial polymerization of vinyl acetate is methanol. The polymerization is typically conducted in the temperature range of 10°C to 80°C. The lower end of the polymerization range is known to give products with improved properties. The percent conversion of vinyl acetate to polyvinyl acetate can vary over a wide range. Though conversions ranging from 20% to 100% have been found satisfactory, commercially at least about 30% conversion is preferable.

The "acid-functional" comonomer is one or more of (i) a monocarboxylic unsaturated acid, (ii) a dicarboxylic unsaturated acid, (iii) an alkyl ester of (i), (iv) an alkyl ester of (ii), (v) an alkali metal salt of (i), (vi) an alkali metal salt of (ii), (vii) an alkaline earth metal salt of (i), (viii) an alkaline earth metal salt of (ii), (ix) an anhydride of (i), and (x) an anhydride of (ii).

Some of the examples of such comonomers include methacrylic acid, methyl methacrylate, 2-hydroxyethyl acrylate, hydroxyl methacrylate, ethyl methacrylate, n-butyl methacrylate, maleic acid, monomethyl maleate, dimethyl maleate, maleic anhydride, itaconic acid, monomethyl itaconate, dimethyl itaconate, and itaconic anhydride.

Preferred are lower alkyl (C1-C8, or C1-C4) acrylates and methacryles. Non-limiting examples of such comonomers include methyl acrylate, methyl methacrylate, ethyl acrylate, ethyl methyacrylate, i-propyl acrylate, i-propyl methacrylate, n-propyl acrylate, n-propyl methacrylate, i-butyl acrylate, i-butyl methacrylate, n-butyl acrylate, n-butyl methacrylate, t-butyl acrylate, t-butyl methacrylate, ethylhexyl acrylate, ethylhexyl methacrylate and others. Preferred comonomers include methyl acrylate, methyl methacylate and mixtures thereof, and particularly methyl acrylate.

The comonomer content of polyvinyl acetate copolymer (and resulting polyvinyl alcohol copolymer (2)) ranges from about 0.1 mol%, or about 0.5 mol%, or about 1 mol%, to about 15 mol%, or to about 10 mol%, or to about 8 mol%. In the case of methyl acrylate, the amount is typically about 10 mol% or less, based on the total moles of monomer. In the case of methyl methacrylate, the amount is typically about 5 mol% or less, based on the total moles of monomer.

The viscosity-average degree of polymerization of polyvinyl acetate copolymer (and resulting polyvinyl alcohol copolymer (2)) varies anywhere from about 300, or from about 500, or from about 700, to about 3000, or to about 2000. The viscosity-average degree of polymerization of a polyvinyl alcohol copolymer is a value measured in accordance with JIS K6726 (1994), as described above.

The polyvinyl acetate is converted to polyvinyl alcohol via hydrolysis or alcoholysis processes generally known to those of ordinary skill in the relevant art. In such processes, the polyvinyl acetate is contacted with an alkali catalyst such as sodium hydroxide or sodium methylate. The major products of this reaction are polyvinyl alcohol and methyl acetate.

The resulting polyvinyl alcohols, of course, will have substantially the same monomer makeup and degree of polymerization as the starting polyvinyl acetates.

Polyvinyl alcohol copolymer (2) should have a degree of hydrolysis of from about 70 mol%, or from about 75 mol%, or from about 85 mol%, or from about 93 mol%, or from about 95 mol%, or from about 98 mol%, or from about 99 mol%, to 100 mol% (maximum). The degree of hydrolysis can be measured in accordance with JIS K6726 (1994).

For polyvinyl alcohol copolymer (2) with good cold-water solubility, the slurry alcoholysis process as described in US2019/0055326A1 is desirably used for hydrolyzing the polyvinyl acetate copolymer to polyvinyl alcohol copolymer (2), as the described slurry alcohol process results in polyvinyl alcohol copolymers having suitable cold-water (20°C) solubility. Such process produces polyvinyl alcohol copolymer agglomerate particles having a "popcorn-like" morphology as discussed in the above-cited US2019/0055326A1.

As described in the above-incorporated disclosure, suitable polyvinyl alcohol can be produced by a slurry alcoholysis process in which polyvinyl alcohol is obtained from polyvinyl acetate and recovered as a slurry in a methanol and methyl acetate solvent system. Such process is desirably continuous. The slurry alcoholysis process is in a general sense well known to those of ordinary skill in the relevant art, such as disclosed in US2734048, but modified as discussed in above cited US2019/0055326A1 and as discussed below.

In one embodiment, a first solution of typically about 30wt% to about 60wt% polyvinyl acetate copolymer in methanol, and a second solution of dilute sodium methylate alcoholysis catalyst in methanol, are continuously fed to an alcoholysis unit wherein the reaction proceeds to produce a first slurry of the alcoholyzed polyvinyl acetate (polyvinyl alcohol) and methyl acetate.

Catalyst amount typically ranges from about 0.2 wt% to about 0.5 wt% based on the weight of the reaction mixture.

The temperature of the alcoholysis reaction in the alcoholysis unit is typically from about 58°C, or from about 64°C, to about 70°C, or to about 68°C. The pressure within the alcoholysis unit ranges from slightly below atmospheric pressure to slightly above atmospheric pressure, but is typically slightly above atmospheric pressure.

The alcoholysis unit contains an agitation means so that the alcoholysis is at least partially conducted under agitation conditions. Such agitation means are well known to those of ordinary skill in the relevant art.

When the alcoholysis reaches about 40-50%, the polymer partially precipitates. The insoluble material takes the form of a gel of polymer molecules solvated with methanol. As the solubility decreases by further alcoholysis, the gel becomes tougher and begins to reject the associated solvent molecules. When the alcoholysis is completed, the polymer and solvent are mutually insoluble. If this gel is allowed to stand undisturbed, alcoholysis proceeds and the product is obtained in a massive, unworkable form. However, if the gel is worked mechanically (agitated) during this range above about 40% alcoholysis, the polymer will break down to finely-divided solids insoluble in the alcohol. The collapsing gel traps and sticks together with the fine particles from the previous alcoholysis cycle producing polyvinyl alcohol of a desired "popcorn ball" morphology.

In one embodiment, the alcoholysis unit is made up of a primary alcoholysis vessel where the reaction proceeds to produce a slurry of partially alcoholyzed polyvinyl acetate. The slurry from the primary alcoholysis vessel overflows to an agitated hold vessel which provides additional residence time for completing the alcoholysis reaction. The slurry from the agitated hold vessel is then pumped through one or more finisher units to react short-circuited polyvinyl acetate, thus ensuring that the conversion is raised to 99.5% or higher of desired completion.

Preferred conversion is a degree of hydrolysis as set forth above.

The resulting first polyvinyl alcohol slurry may then optionally be fed to a neutralizing unit along with an acid to neutralize less than a predominant portion (less than 50 equivalent %), or less than 25 equivalent %, or less than 10 equivalent %, or less than 5 equivalent %, of any excess alkali catalyst, and generate a second slurry. Typically, the acid employed is acetic acid. The temperature entering neutralizing unit is slightly lower than in the alcoholysis unit, generally in the range of from about 53°C to about 60°C, and typically in the range from about 55°C to about 58°C. Pressure conditions in the neutralizing unit are typically similar to those in the alcoholysis unit.

If present, the neutralizing unit can be used to control the pH of the resulting second slurry.

Desirably, the neutralizing unit is not present (or is bypassed if present, or is present with substantially no acid feed, or is present with no acid feed), and the excess alkali catalyst is substantially not neutralized (or not neutralized) and remains in first slurry.

In one embodiment, the second slurry resulting from the neutralization unit, if present, or if not present the first slurry, is then fed to an optional thermal treating unit. The temperature of the first slurry, or the second slurry if present, is reduced in the thermal treating unit to less than the temperature entering the thermal treating unit. Depending on the desired morphology of the final polyvinyl alcohol copolymer particulate, the temperature can be reduced to less than 50°C, or to less than 40°C, or to less than 35°C, or to less than 30°C, or to less than 25°C, or to less than ambient conditions, with the lower temperatures resulting in higher amorphous and less crystalline content.

The thermal treatment unit can be a holding tank with mild heating, or no heating or even active cooling so that the temperature of the slurry is reduced between entry and exit.

In one embodiment, the thermal treating unit is not present.

In one embodiment, the thermally treated slurry, or the second slurry if the thermal treatment unit is not present or not utilized, or the first slurry if the thermal treatment unit and the neutralizing unit are not present or not utilized, is fed to a solids-liquid separation unit where polyvinyl alcohol is separated from the slurry to generate a polyvinyl alcohol wet cake and separated liquids. The solids-liquid separation unit can be a centrifuge and/or filtration device or other conventional solids-liquid separation device.

In an alternate embodiment, the thermal treatment unit and solids-liquid separation unit can be combined in a single unit operation where the residence time of the slurry and solids is sufficient to reduce the temperature of the second slurry to the desired level.

In one embodiment, the process further comprises the step of washing the polyvinyl alcohol wet cake to produce a purified polyvinyl alcohol wet cake, which is then subject to the drying step. The resulting polyvinyl alcohol wet cake can optionally be purified by feeding the wet cake into a washing unit where it is contacted typically with a fresh or recycled methanol stream to remove ash components and other contaminates to generate a purified polyvinyl alcohol wet cake.

In order to generate the final particulate agglomerated polyvinyl alcohol particles, the purified polyvinyl alcohol wet cake after centrifugation, or the wet cake if the washing unit is not present or not utilized, is fed to a drying unit where it is dried via conventional means to remove sufficient remaining liquid content so that the resulting particulate agglomerated polyvinyl alcohol copolymer particles can be recovered, preferably as a free-flowing powder.

D(90) particles sizes of the polyvinyl alcohol copolymer agglomerated particles produced by the above slurry alcohol process range from about 1 $\mu$m, or from about 10 $\mu$m, to about 1000 $\mu$m, or to about 400 $\mu$m.

Bulk density of the polyvinyl alcohol copolymer agglomerated particles produced by the above slurry alcohol process is preferably 0.55 g/cm$^3$ or less, and more preferably about 0.50 g/cm$^3$ or less.

Additional process details are described in US2019/0055326A1, as well as US2734048, US3497487, US3654247 and general knowledge of those of ordinary skill in the relevant art.

Pesticides

The seed coating compositions further comprise one or more hydrophobic pesticides. In the context of the present invention, "pesticide" is used broadly to refer to agents such as insecticides, fungicides, nematocides and similar materials that prevent or reduce damage to the seeds from living organisms.

In the context of the present invention, a "hydrophobic" pesticide additives is one that is not in and of itself soluble or stably dispersible in water (for example, without the use of a surfactant).

Such hydrophobic pesticides are in general well known to those of ordinary skill in the relevant art, and are generally commercially available.

Examples of suitable fungicides include pyraclostrobin, fluxapyroxad, ipconazole, triflozystrobin, metalaxyl (metalaxyl 265 ST), fludioxonil (fludioxonil 4L ST), thiabendazole (thiabendazole 4L ST), itriticonazole, imidacloprid, tefluthrin and combinations thereof.

Examples of suitable insecticides include clothianidin , imidacloprid, SENATOR® 600 ST (Nufarm US), tefluthrin, terbufos, cypermethrin, thiodicarb, lindane, furathiocarb, acephate and combinations thereof

The hydrophobic pesticides are typically utilized in minor amounts (an "effective amount" to achieve the desired pesticidal effect) in accordance with dosages recommended by the manufacturers of such pesticides.

Aqueous Coating Compositions

The aqueous coating compositions comprise water as the predominant carrier medium.

The polyvinyl alcohol copolymer is used in the aqueous coating composition in an amount of from about 0.5 wt%, or from about 1.0 wt%, or from about 2.0 wt%, to about 10 wt%, or to about 8 wt%, or to about 6 wt%, based on the total weight of the coating composition.

Depending on the optional components as described below, the solids content of the aqueous coating compositions in accordance with the present invention will typically range from about 1 wt%, or from about 2 wt%, or from about 5 wt%, to about 25 wt%, or to about 20 wt%, based on the total weight of the aqueous coating composition.

The aqueous coating compositions can also be provided as a concentrate that can be diluted with water for application to the seeds.

Depending on the polyvinyl alcohol copolymer and other optional ingredients, the aqueous coating composition can be in the form of a solution, dispersion, emulsion or suspension, as those terms are understood by persons of ordinary skill in the art. For example, some of the components may be in solution, while others may be dispersed, emulsified and/or suspended. In such case, the components of the aqueous coating composition should be substantially evenly distributed in the aqueous coating prior to application. Thus the aqueous coating composition should desirably be a stable solution, emulsion and/or dispersion, or a solution, emulsion, dispersion and/or suspension in which the components can readily be evenly distributed via conventional means such as agitation with or without mild heating.

Optional Components

Other polymers compatible to polyvinyl alcohol such as polyvinylpyrrolidone, starch and high molecular weight polyethylene glycol may be blended to the polyvinyl alcohol to enhance coating properties. Plasticizer, talc, pigment and detackifier may be optionally added to the seed coating solution, emulsion or suspension.

Application of Aqueous Coating Compositions

Methods for applying aqueous coating compositions to seeds are well known to those skilled in the art. Conventional methods include, for example, mixing, spraying or a combination thereof. Various coating machines are commercially available which utilize various coating technologies such as rotary coaters, drum coaters and fluidized bed. The seeds may be coated via a batch or continuous coating process.

The seeds are desirably substantially uniformly coated with a film of the coating composition.

Coated Seeds

Seeds to be treated using the seed coating compositions described herein include, for example, wheat, barley, rye, oats, rice, sorghum, apples, pears, plums, peaches, almonds, cherries, strawberries, raspberries, blackberries, sugar beet, fodder beet, beans, lentils, peas, soybeans, rape, mustard, poppy, olives, sunflowers, coconut, castor oil plants, cocoa beans, marrows, cucumbers, melons, cotton, flax, hemp, jute, oranges, lemons, grapefruit, mandarins, spinach, lettuce, asparagus, cabbages, carrots, onions, tomatoes, potatoes, paprika, avocados, flowers, shrubs, broad-leaved trees, conifers , soybeans, beans, tomatoes, peppers, potatoes, corn, onions, bulbs, rice, sorghum, maize, tobacco, nuts, coffee and sugar cane.

Examples

The invention will be further understood from the following specific examples of the properties of the polymer. However, it will be understood that these examples are not to be construed as limiting the general scope of the present invention in any manner.

CPVOH #1 was a partially hydrolyzed (87-89 mol%), medium viscosity (20.5-24.5 mPa•s) polyvinyl alcohol homopolymer commercially available under the trade designation "KURARAY POVAL™ 22-88" from Kuraray Co., Ltd. (Tokyo, Japan).

CPVOH #2 was a partially hydrolyzed (86.5-90 mol%), lower viscosity (4.6-5.4 mPa•s) polyvinyl alcohol homopolymer commercially available under the trade designation "KURARAY POVAL™ 5-88" from Kuraray Co., Ltd. (Tokyo, Japan).

PVOH 1-1 was a highly-hydrolyzed (98.2 mol%), medium viscosity-average degree of polymerization (1550), and ethylene content of 4.1 mol% ethylene - vinyl alcohol copolymer obtained by hydrolyzing a copolymer of ethylene and vinyl acetate.

PVOH 2-1 was a highly-hydrolyzed (99.5 mol%), medium viscosity-average degree of polymerization (1440), and methyl acrylate content of 5.1 mol% methyl acrylate - vinyl alcohol copolymer obtained by hydrolyzing a copolymer of methyl acrylate and vinyl acetate.

Example 1: Treatment of Soybeans Seeds

Seed coating formulations were prepared according to Table 2. Soybean seeds were treated with a base of an Acceleron® package (Monsanto Company, containing metalaxyl, pyraclostrobin, imidacloprid and fluxapyroxad), Color Coat Red and water to achieve a rate of 3.4 mL/kg (5.8 fl. oz/cwt) of the Acceleron® package.

Table 2

| Sample (Rate fl oz) | Slurry | | mL/kg (mL/lbs.) |
|---|---|---|---|
| Control (no PVOH) | Acceleron® Package | 5.8 | 45.3727 (20.5807) |
| | Water | 4.2 | 32.8562 (14.9033) |
| | Total | 10.0 | 78.2200 (35.4800) |

9

(continued)

| Sample (Rate fl oz) | Slurry | | mL/kg (mL/lbs.) |
|---|---|---|---|
| | | | |
| Coating Formula #1 | Acceleron® Package | 5.8 | 45.3727 (20.5807) |
| | PVOH | 0.75 | 5.8672 |
| | | | (2.6613) |
| | Water | 4.2 | 26.9890 (12.2420) |
| | Total | 10.75 | 78.2288 (35.4840) |
| | | | |
| Coating Formula #2 | Acceleron® Package | 5.8 | 45.3727 (20.5807) |
| | PVOH | 2.25 | 17.6015 (7.9839) |
| | Water | 1.95 | 15.2547 (6.9194) |
| | Total | 10.0 | 78.2288 (35.484) |
| For 2400g of seed 15.64 mL of slurry was applied (106%) coverage 16.5828 mL | | | |

*Dust-off procedure*: The dried, treated soybean seeds were tumbled in a closed system under vacuum. An air flow was maintained through the container which was filtered through a sieve. The amount of dust on the filter was weighted, and the results are presented in Table 3 below.

Table 3

| PVOH | Coating Formula | Mean Grams of Dust /100,000 Seeds |
|---|---|---|
| Control | #1 | 0.0130 |
| PVOH 1-1 | #1 | 0.0069 |
| PVOH 1-1 | #2 | 0.0060 |
| CPVOH #1 | #1 | 0.0078 |
| CPVOH #2 | #1 | 0.0190 |
| PVOH 2-1 | #1 | 0.0060 |

As can be seen, PVOH types (1) and (2) both show lower amounts of dust produced than either the control (no PVOH) or a coating with a standard polyvinyl alcohol homopolymer (CPVOH).

*Warm Germination:* This test was used to determine the maximum germination potential of untreated seeds and seeds that were subjected to treatment. Four replications of 100 seeds were planted on moistened crepe cellulose paper and placed into 25°C for seven days, after which the seedlings were evaluated as "normal", "abnormal" or "dead" according to AOSA rules. Percent "normal" germination was determined as the average number of seeds which had germinated within the test period, minus any "abnormal" or "dead" seeds, divided by the total number of original seeds, times 100. The results are shown in Table 4 below.

Table 4

| PVOH | Coating | Normal | Abnormal | Dead |
|---|---|---|---|---|
| None | Control | 95 | 4 | 0 |
| PVOH 1-1 | Coating #1 | 96 | 4 | 0 |
| PVOH 1-1 | Coating #2 | 95 | 4 | 1 |

As the warm germination trial represented ideal and unstressed germination conditions, the result indicates that the coating compositions of the present invention did not have a detrimental impact on germination rates under ideal conditions. Therefore, these results indicate that the coating compositions of the present invention did not harm or reduce the germination of the seed, compared to the control seeds, which is desirable for determining a useful seed coating.

*Cold germination test:* This test is designed to measure the ability of seeds to germinate under adverse condition associated with high soil moisture, low soil temperature and microbial activity. Four replications of 100 seeds were planted on moistened crepe cellulose paper and covered with sand. The covered trays were placed at 10°C for seven days and moved into 25°C for four days after which the seedlings were evaluated as "normal" according to AOSA rules with consideration to vigor. Percent "normal" germination was determined as the average number of seeds which had germinated within the test period, minus any "abnormal" or "dead" seeds, divided by the total number of original seeds, times 100. The results are shown in Table 5 below.

Table 5

| PVOH | Coating | Normal |
|---|---|---|
| None | Control | 78 |
| PVOH 1-1 | Coating #1 | 84 |
| PVOH 1-1 | Coating #2 | 87 |

The results of cold germination tests indicate that there is a significant improvement in the % germination rate of the seeds coated with the coating compositions in accordance with the present invention.

*Accelerated aging test:* The accelerated aging test estimates the carryover potential of a seed lot in warehouse storage. Seeds were weighed and placed in a water-jacketed chamber, maintained at 43°C and high humidity for 72 hours. Four replications of 100 seeds were planted on moistened crepe cellulose paper and covered with sand. The planted covered trays were placed at 25°C for seven days after which the normal seedlings were evaluated according to AOSA rules. Percent "normal" germination was determined as the average number of seeds which had germinated within the test period, minus any "abnormal" or "dead" seeds, divided by the total number of original seeds, times 100. The results are shown in Table 6 below.

Table 6

| PVOH | Coating | Normal |
|---|---|---|
| None | Control | 71 |
| PVOH 1-1 | Coating #1 | 70 |
| PVOH 1-1 | Coating #2 | 79 |

The results of accelerated aging indicate at a minimum no material degradation of the coated seeds relative to the control. Therefore, these results indicates that the coating compositions of the present invention did not harm or reduce the germination of the seed, compared to the control seeds, which is desirable for determining a useful seed coating.

*Flowability:* Dry flow of soybeans was measured as the time it took for 1200 g (four replicates of 300g) of seeds to flow through a funnel at 56% relative humidity and 25°C. The addition of coatings to soybeans tends to slow down the flow of seeds considerably, which is not a desired characteristic. As shown in Table 7, use of the coating compositions in accordance with the present invention decreased flow by less than a second compared to the control, effectively flowing as fast as the untreated seeds.

Bridging of seeds takes place when seeds exiting out of the coater were collected in the storage hopper and compacted by oncoming seeds. This presents a challenge to the seed treatment facility in terms of equipment blocking, labor and time. As shown in Table 7, use of the coating compositions in accordance with the present invention showed no tendency for bridging.

Table 7

| PVOH | Coating | Mean | Comments |
|---|---|---|---|
| None | Control | 2.20 | No bridging observed |
| PVOH 1-1 | Coating #1 | 2.41 | No bridging observed |

(continued)

| PVOH | Coating | Mean | Comments |
|------|---------|------|----------|
| PVOH 1-1 | Coating #2 | 2.23 | No bridging observed |

*Plantability:* The correct planting distance was found where the planting distance between seeds was +/-25% of the target distance. The expected targets where a single seed should have been planted were evaluated: where a single seed was missing, it was counted as a missed target (calculated as a percentage of the total number of targets) and where two or more consecutive targets were missed, they were counted as a multiple missed target. The number of seeds per test used were 1000. Table 8 shows seeds treated according to present invention showed better plantability than the control. Clearly, an increased planting rate and lower incidence of duplicate seeds in a single target or completely missed targets will allow for a more even stand of plants, which contributes to better growing conditions and ultimately increased yield per unit area planted.

Table 8

| PVOH | Coating | Skip Count | Doublets | Misplaced | Loss Per Acre |
|------|---------|------------|----------|-----------|---------------|
| None | Control | 1 | 1 | 0 | 3 |
| PVOH 1-1 | Coating #1 | 0 | 0 | 0 | 0 |
| PVOH 1-1 | Coating #2 | 0 | 0 | 0 | 0 |

**Claims**

1.  A coating composition comprising a solution, dispersion, emulsion or suspension of a polyvinyl alcohol polymer binder and a hydrophobic pesticide additive in an aqueous medium, **characterized in that**:

    (1) the polyvinyl alcohol is selected from the group consisting of:

    (A) a hydrolyzed copolymer of vinyl acetate and ethylene as comonomers, having

      (a) an ethylene content of from 0.1 mol% to 15 mol% based on the total moles of monomers,
      (b) a viscosity-average degree of polymerization of from 300 to 3000, and
      (c) a degree of hydrolysis of from 85 mol% to 100 mol%; and

    (B) a hydrolyzed copolymer of vinyl acetate and one or more unsaturated acids as comonomers, wherein

      (a) the unsaturated acid is selected from the group consisting of

        (i) a monocarboxylic unsaturated acid,
        (ii) a dicarboxylic unsaturated acid,
        (iii) an alkyl ester of (i),
        (iv) an alkyl ester of (ii),
        (v) an alkali metal salt of (i),
        (vi) an alkali metal salt of (ii),
        (vii) an alkaline earth metal salt of (i),
        (viii) an alkaline earth metal salt of (ii), and
        (ix) an anhydride of (i) and (x) an anhydride of (ii),

      (b) the copolymer having

        (i) an unsaturated acid content of from 0.1 mol% to 15 mol% based on the total moles of monomers,
        (ii) a viscosity-average degree of polymerization of from 300 to 3000, and
        (iii) a degree of hydrolysis of from 70 mol% to 100 mol%; and

    (2) the coating composition comprises from 0.5 wt% to 10 wt% polyvinyl alcohol based on the total weight of

EP 3 809 843 B1

the coating composition,

wherein the viscosity-average degree of polymerization is a value measured in accordance with JIS K6726 (1994).

2. The coating composition of claim 1, **characterized in that** the coating composition comprises at least one hydrophobic pesticide additive selected from the group consisting of a fungicide, an insecticide and a nematocide.

3. The coating composition of claim 1 or 2, **characterized in that** the polyvinyl alcohol is (A).

4. The coating composition of claim 1 or 2, **characterized in that** the polyvinyl alcohol is (B).

5. The coating composition of claim 4, **characterized in that** the polyvinyl alcohol (B) has a cold-water solubility (CWS, 20°C) of 50 wt% or greater.

6. A seed encapsulated with a film of a polyvinyl alcohol, **characterized in that** the polyvinyl alcohol is selected from the group consisting of:

(A) a hydrolyzed copolymer of vinyl acetate and ethylene as comonomers, having

(a) an ethylene content of from 0.1 mol% to 15 mol% based on the total moles of monomers,
(b) a viscosity-average degree of polymerization of from 300 to 3000, and
(c) a degree of hydrolysis of from 85 mol% to 100 mol%; and

(B) a hydrolyzed copolymer of vinyl acetate and one or more unsaturated acids as comonomers, wherein

(a) the unsaturated acid is selected from the group consisting of

(i) a monocarboxylic unsaturated acid,
(ii) a dicarboxylic unsaturated acid,
(iii) an alkyl ester of (i),
(iv) an alkyl ester of (ii),
(v) an alkali metal salt of (i),
(vi) an alkali metal salt of (ii),
(vii) an alkaline earth metal salt of (i),
(viii) an alkaline earth metal salt of (ii), and
(ix) an anhydride of (i) and
(x) an anhydride of (ii),

(b) the copolymer having

(i) an unsaturated acid content of from 0.1 mol% to 15 mol% based on the total moles of monomers,
(ii) a viscosity-average degree of polymerization of from 300 to 3000, and
(iii) a degree of hydrolysis of from 70 mol% to 100 mol%;

wherein the film further comprises a hydrophobic pesticide additive.

7. A method for preparing the seed of claim 6, **characterized in that** the seed is obtained by applying the coating composition of any one of claims 1-5 to the seed and drying the so-applied coating.

8. A plurality of seeds, said seeds as set forth in claim 6 or claim 7, **characterized in that** said plurality has an average bulk dust-off property of less than 0.1 grams/100000 seeds.


**Patentansprüche**

1. Beschichtungszusammensetzung, umfassend eine Lösung, Dispersion, Emulsion oder Suspension eines Polyvinylalkohol-Polymerbindemittels und eines hydrophoben Pestizidadditivs in einem wässrigen Medium, **dadurch gekennzeichnet, dass**:

(1) der Polyvinylalkohol ausgewählt ist aus der Gruppe, bestehend aus:

(A) einem hydrolysierten Copolymer aus Vinylacetat und Ethylen als Comonomere mit

(a) einem Gehalt an Ethylen von 0,1 Mol-% bis 15 Mol-%, bezogen auf die Gesamtmolzahl der Monomere,
(b) einem viskositätsmittleren Polymerisationsgrad von 300 bis 3000, und
(c) einem Hydrolysegrad von 85 Mol-% bis 100 Mol-%; und

(B) einem hydrolysierten Copolymer aus Vinylacetat und einer oder mehreren ungesättigten Säuren als Comonomere, wobei

(a) die ungesättigte Säure ausgewählt ist aus der Gruppe, bestehend aus

(i) einer ungesättigten Monocarbonsäure,
(ii) einer ungesättigten Dicarbonsäure,
(iii) einem Alkylester von (i),
(iv) einem Alkylester von (ii),
(v) einem Alkalimetallsalz von (i),
(vi) einem Alkalimetallsalz von (ii),
(vii) einem Erdalkalimetallsalz von (i),
(viii) einem Erdalkalimetallsalz von (ii), und
(ix) einem Anhydrid von (i) und
(x) einem Anhydrid von (ii),

(b) das Copolymer

(i) einen Gehalt an ungesättigter Säure von 0,1 Mol-% bis 15 Mol-%, bezogen auf die Gesamtmolzahl der Monomere,
(ii) einen viskositätsmittleren Polymerisationsgrad von 300 bis 3000, und
(iii) einen Hydrolysegrad von 70 Mol-% bis 100 Mol-%, aufweist; und

(2) die Beschichtungszusammensetzung von 0,5 Gew.-% bis 10 Gew.-% Polyvinylalkohol, bezogen auf das Gesamtgewicht der Beschichtungszusammensetzung, umfasst,

wobei der viskositätsmittlere Polymerisationsgrad ein gemäß JIS K6726 (1994) gemessener Wert ist.

**2.** Beschichtungszusammensetzung nach Anspruch 1, **dadurch gekennzeichnet, dass** die Beschichtungszusammensetzung mindestens ein hydrophobes Pestizidadditiv enthält, das ausgewählt ist aus der Gruppe, bestehend aus einem Fungizid, einem Insektizid und einem Nematozid.

**3.** Beschichtungszusammensetzung nach Anspruch 1 oder 2, **dadurch gekennzeichnet, dass** der Polyvinylalkohol (A) ist.

**4.** Beschichtungszusammensetzung nach Anspruch 1 oder 2, **dadurch gekennzeichnet, dass** der Polyvinylalkohol (B) ist.

**5.** Beschichtungszusammensetzung nach Anspruch 4, **dadurch gekennzeichnet, dass** der Polyvinylalkohol (B) eine Kaltwasserlöslichkeit (CWS, 20°C) von 50 Gew.-% oder mehr aufweist.

**6.** Saatgut, das mit einem Film aus einem Polyvinylalkohol eingekapselt ist, **dadurch gekennzeichnet, dass** der Polyvinylalkohol ausgewählt ist aus der Gruppe, bestehend aus:

(A) einem hydrolysierten Copolymer aus Vinylacetat und Ethylen als Comonomere, mit

(a) einem Gehalt an Ethylen von 0,1 Mol-% bis 15 Mol-%, bezogen auf die Gesamtmolzahl der Monomere,
(b) einem viskositätsmittleren Polymerisationsgrad von 300 bis 3000, und
(c) einem Hydrolysegrad von 85 Mol-% bis 100 Mol-%; und

(B) einem hydrolysierten Copolymer aus Vinylacetat und einer oder mehreren ungesättigten Säuren als Comonomere, wobei

(a) die ungesättigte Säure ausgewählt ist aus der Gruppe, bestehend aus

(i) einer ungesättigten Monocarbonsäure,
(ii) einer ungesättigten Dicarbonsäure,
(iii) einem Alkylester von (i),
(iv) einem Alkylester von (ii),
(v) einem Alkalimetallsalz von (i),
(vi) einem Alkalimetallsalz von (ii),
(vii) einem Erdalkalimetallsalz von (i),
(viii) einem Erdalkalimetallsalz von (ii), und
(ix) einem Anhydrid von (i) und
(x) einem Anhydrid von (ii),

(b) das Copolymer

(i) einen Gehalt an ungesättigter Säure von 0,1 Mol-% bis 15 Mol-%, bezogen auf die Gesamtmolzahl der Monomere,
(ii) einen viskositätsmittleren Polymerisationsgrad von 300 bis 3000, und
(iii) einen Hydrolysegrad von 70 Mol-% bis 100 Mol-%, aufweist;

wobei der Film ferner ein hydrophobes Pestizidadditiv umfasst.

7. Verfahren zur Herstellung des Saatguts nach Anspruch 6, **dadurch gekennzeichnet, dass** das Saatgut durch Auftragen der Beschichtungszusammensetzung nach einem der Ansprüche 1 -5 auf das Saatgut und Trocknen der so aufgetragenen Beschichtung erhalten wird.

8. Mehrzahl von Samen nach Anspruch 6 oder 7, **dadurch gekennzeichnet, dass** die Mehrzahl eine durchschnittliche Schüttstaubeigenschaft von weniger als 0,1 Gramm/100000 Samen aufweist.

**Revendications**

1. Composition de revêtement comprenant une solution, une dispersion, une émulsion ou une suspension d'un liant polymère de poly(alcool vinylique) et d'un additif pesticide hydrophobe dans un milieu aqueux, **caractérisée en ce que** :

(1) le poly(alcool vinylique) est choisi parmi le groupe consistant en :

(A) un copolymère hydrolysé d'acétate de vinyle et d'éthylène en tant que comonomères, ayant

(a) une teneur en éthylène allant de 0,1 % en moles à 15 % en moles, sur base du nombre total de moles de monomères,
(b) un degré de polymérisation moyen en viscosité allant de 300 à 3000, et
(c) un degré d'hydrolyse allant de 85 % en moles à 100 % en moles, et

(B) un copolymère hydrolysé d'acétate de vinyle et d'un ou de plusieurs acides insaturés en tant que comonomères, dans lequel

(a) l'acide insaturé est choisi parmi le groupe consistant en

(i) un acide monocarboxylique insaturé,
(ii) un acide dicarboxylique insaturé,
(iii) un ester alkylique de (i),
(iv) un ester alkylique de (ii),
(v) un sel de métal alcalin de (i),

(vi) un sel de métal alacalin de (ii),
(vii) un sel de métal alcalino-terreux de (i),
(viii) un sel de métal alcalino-terreux de (ii),
(ix) un anhydride de (i), et (x) un anhydride de (ii),

(b) le copolymère ayant

(i) une teneur en acide insaturé allant de 0,1 % en moles à 15 % en moles sur base du nombre total de moles de monomères,
(ii) un degré de polymérisation moyen en viscosité allant de 300 à 3000, et
(iii) un degré d'hydrolyse allant de 70 % en moles à 100 % en moles, et

(2) la composition de revêtement comprend de 0,5 % en poids à 10 % en poids de poly(alcool vinylique) sur base du poids total de la composition de revêtement,

où le degré de polymérisation moyen en viscosité est une valeur mesurée selon JIS K6726 (1994).

**2.** Composition de revêtement selon la revendication 1, **caractérisée en ce que** la composition de revêtement comprend au moins un additif pesticide hydrophobe choisi parmi le groupe consistant en un fongicide, un insecticide et un nématicide.

**3.** Composition de revêtement selon la revendication 1 ou 2, **caractérisée en ce que** le poly(alcool vinylique) est le (A).

**4.** Composition de revêtement selon la revendication 1 ou 2, **caractérisée en ce que** le poly(alcool vinylique) est le (B).

**5.** Composition de revêtement selon la revendication 4, **caractérisée en ce que** le poly(alcool vinylique) (B) présente une solubilité dans l'eau froide (CWS, 20 °C) de 50 % en poids ou plus.

**6.** Graine encapsulée d'un film de poly(alcool vinylique), **caractérisée en ce que** le poly(alcool vinylique) est choisi parmi le groupe consistant en :

(A) un copolymère hydrolysé d'acétate de vinyle et d'éthylène en tant que comonomères, ayant

(a) une teneur en éthylène allant de 0,1 % en moles à 15 % en moles, sur base du nombre total de moles de monomères,
(b) un degré de polymérisation moyen en viscosité allant de 300 à 3000, et
(c) un degré d'hydrolyse allant de 85 % en moles à 100 % en moles, et

(B) un copolymère hydrolysé d'acétate de vinyle et d'un ou de plusieurs acides insaturés en tant que comonomères, dans lequel

(a) l'acide insaturé est choisi parmi le groupe consistant en

(i) un acide monocarboxylique insaturé,
(ii) un acide dicarboxylique insaturé,
(iii) un ester alkylique de (i),
(iv) un ester alkylique de (ii),
(v) un sel de métal alcalin de (i),
(vi) un sel de métal alacalin de (ii),
(vii) un sel de métal alcalino-terreux de (i),
(viii) un sel de métal alcalino-terreux de (ii),
(ix) un anhydride de (i), et
(x) un anhydride de (ii),

(b) le copolymère ayant

(i) une teneur en acide insaturé allant de 0,1 % en moles à 15 % en moles sur base du nombre total de moles de monomères,

(ii) un degré de polymérisation moyen en viscosité allant de 300 à 3000, et

(iii) un degré d'hydrolyse allant de 70 % en moles à 100 % en moles,

où le film comprend en outre un additif pesticide hydrophobe.

7. Procédé de préparation de la graine selon la revendication 6, **caractérisé en ce que** la graine est obtenue par application de la composition de revêtement selon l'une quelconque des revendications 1 à 5, sur la graine et séchage du revêtement ainsi appliqué

8. Ensemble de graines, lesdites graines étant décrites à la revendication 6 ou revendication 7, **caractérisé en ce que** ledit ensemble présente une propriété de poussiérage moyenne en vrac inférieure à 0,1 gramme/100 000 graines.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3698133 A
- US 3707807 A
- US 3947996 A
- US 4249343 A
- US 4272417 A
- US 4729190 A
- US 5849320 A
- US 5876739 A
- US 90101131 B2
- WO 9011011 A1
- WO 2005062899 A2
- WO 2008037489 A2
- WO 2013166020 A1
- WO 2017187994 A1
- US 2013165487 A1
- US 20190055326 A1
- US 2734048 A
- US 3497487 A
- US 3654247 A